# EUROPEAN PATENT APPLICATION

(11) **EP 4 582 212 A1**
(43) Date of publication of application: **09.07.2025**
(21) Application number: 23860077.9
(22) Date of filing: 10.08.2023
(51) Int. Cl.: B23K 20/12

(54) **BONDED SHAPED BODY, AND METHOD FOR MANUFACTURING SAME**

(30) Priority: 31.08.2022 JP 2022138404
(71) Applicant: OSAKA UNIVERSITY, Suita-shi Osaka 565-0871 (JP)
(72) Inventor: FUJII, Hidetoshi, Suita-shi, Osaka 565-0871 (JP); USHIODA, Kohsaku, Suita-shi, Osaka 565-0871 (JP); MORISADA, Yoshiaki, Suita-shi, Osaka 565-0871 (JP)
(74) Representative: Meissner Bolte Partnerschaft mbB
(86) International application number: PCT/JP2023/029774
(87) International publication number: WO 2024/048314

(57) **Abstract**

A welded shaped body (1) includes a disk part (10) and a first blade part (20) that is welded to the disk part (10) by linear friction welding. A structure that is integrally formed by being cut out from one solid block (100) made of a material of a type identical to a type of a material of the first blade part (20) and that has a shape identical to a shape of the welded shaped body (1) is referred to as a comparative structure (101). The first blade part (20) has a material structure that is homogeneous and that exhibits a cold-dwell fatigue life longer than a cold-dwell fatigue life of the comparative structure (101).

## Description

### Technical Field

The present invention relates to a welded shaped body formed with use of linear friction welding.

### Background Art

Conventionally, products such as bladed disks used in engines can be produced by being cut out from materials (for example, forged materials) that have sizes larger than those of the products. In this type of technique, materials are often wasted in a rough working stage in which cutting is carried out. In order to reduce such a waste of materials, for example, techniques of forming bladed disks by welding disks and blades by linear friction welding are studied.

Patent Literature 1 discloses a technique of controlling a welding temperature in linear friction welding so as to improve the mechanical properties of a welded portion as compared with a case where melt welding is carried out.

### Citation List

### [Patent Literature]

Japanese Patent Application Publication Tokukai No. 2018-122344

### Summary of Invention

### Technical Problem

In recent years, regarding the fatigue properties of products, importance is placed on cold-dwell fatigue, in addiction to cyclic fatigue. Cyclic fatigue properties are evaluated on the basis of a fatigue fracture life (the number of repetitions) in a case where a load (tensile stress) is repeatedly applied to a product in a duty cycle, for example, in a triangular waveform. Cold-dwell fatigue is evaluated on the basis of a fatigue fracture life (the number of repetitions) in a case where a tensile stress is repeatedly applied to a product at a temperature of approximately room temperature to 200°C such that the tensile stress is held for certain periods of time (for example, in a duty cycle in a trapezoidal waveform).

Depending on the condition of use of a product, cold-dwell fatigue may cause the actual life of the product to be shorter than the life of the product that is assumed based on the cyclic fatigue properties thereof.

A welded shaped body formed by welding a plurality of members (welding target members) is required to have not only desired mechanical properties but also a long cold-dwell fatigue life.

### Solution to Problem

In order to attain the above object, a welded shaped body in an aspect of the present invention is a welded shaped body including a first welding target member and a second welding target member that is welded to the first welding target member by linear friction welding, wherein in a case where a structure that is integrally formed by being cut out from one solid block made of a material of a type identical to a type of a material of the second welding target member and that has a shape identical to a shape of the welded shaped body is referred to as a comparative structure, the second welding target member has a material structure that is homogeneous and that, in a cold-dwell fatigue test, exhibits a cold-dwell fatigue life longer than a cold-dwell fatigue life of a portion of the comparative structure which portion corresponds to the second welding target member.

A method for producing a welded shaped body in an aspect of the present invention includes a step of preparing a first welding target base member that has a first surface and a second welding target base member that has a second surface, and a friction welding step of bringing the second surface into contact with the first surface and welding the second welding target base member to the first welding target base member by linear friction welding, wherein in a case where a structure that is integrally formed by being cut out from one solid block made of a material of a type identical to a type of a material of the second welding target base member and that has a shape identical to a shape of a welded shaped body formed through the friction welding step is referred to as a comparative structure, the second welding target base member has a material structure that is homogeneous and that, in a cold-dwell fatigue test, exhibits a cold-dwell fatigue life longer than a cold-dwell fatigue life of a portion of the comparative structure which portion corresponds to the second welding target base member.

### Advantageous Effects of Invention

An aspect of the present invention makes it possible to prevent a life from shortening due to cold-dwell fatigue.

### Brief Description of Drawings

Fig. 1 is a plan view schematically illustrating a welded shaped body in an embodiment of the present invention.
Fig. 2 is a perspective view illustrating, in an enlarged manner, a part of the welded shaped body illustrated in Fig. 1.
Fig. 3 illustrates a three-dimensional IPF map obtained by analyzing a result of observing, by an SEM-EBSD method, a surface layer portion of a forged material made of a titanium alloy.
Fig. 4 illustrates a three-dimensional IPF map obtained by analyzing a result of observing, by an SEM-EBSD method, a middle portion of the forged material made of the titanium alloy in a thickness direction.
Fig. 5 is a graph showing results of carrying out a cyclic fatigue test and a cold-dwell fatigue test with respect to each of fatigue test materials and each of base metals of the fatigue test materials.
Fig. 6 is a graph showing results of carrying out a cyclic fatigue test and a cold-dwell fatigue test with respect to (i) each of fatigue test materials which were produced by linear friction welding while respective two types of pressures were applied and (ii) each of base metals of the fatigue test materials.
Fig. 7 is a schematic view for describing a structure of a comparative example.
Fig. 8 is a flowchart illustrating an example of a method for producing the welded shaped body in an embodiment of the present application.
Fig. 9 is a perspective view schematically illustrating an example of the method for producing the welded shaped body.
Fig. 10 is for describing the uniformity of a material structure of a first blade part base member in a thickness direction.
Fig. 11 is for describing the uniformity of a material structure of a first blade part in a thickness direction.
Fig. 12 is for describing a relationship between a material structure of a friction welded portion and a welding pressure.
Fig. 13 is for describing a relationship between the Vickers hardness of the friction welded portion and the welding pressure.

### Description of Embodiments

The following description will discuss embodiments of the present invention with reference to the drawings. Note, however, that the following description is provided for better understanding of the gist of the present invention, and does not limit the present invention unless otherwise stated. For convenience, the drawings referred to in the following description illustrate, in a simplified manner, only main members necessary for describing the embodiments, and description of known technical matters is omitted for simplicity, as appropriate. The shapes and dimensions of the members in the drawings do not necessarily reflect actual shapes and dimensions, and have been changed, as appropriate, for clarity and simplicity of the drawings.

In the present embodiment, a bladed disk that is used in an engine and the like and that is made of a titanium alloy is described as an example of a welded shaped body. Note that, in an embodiment of the present invention, the welded shaped body is not limited to the bladed disk, and also the type of a material of the welded shaped body is not limited to the titanium alloy. For example, the present invention can be applied to welded shaped bodies having various shapes and made of various materials, such as various turbines and molds, within the gist of the present invention.

### [Outline of configuration of welded shaped body]

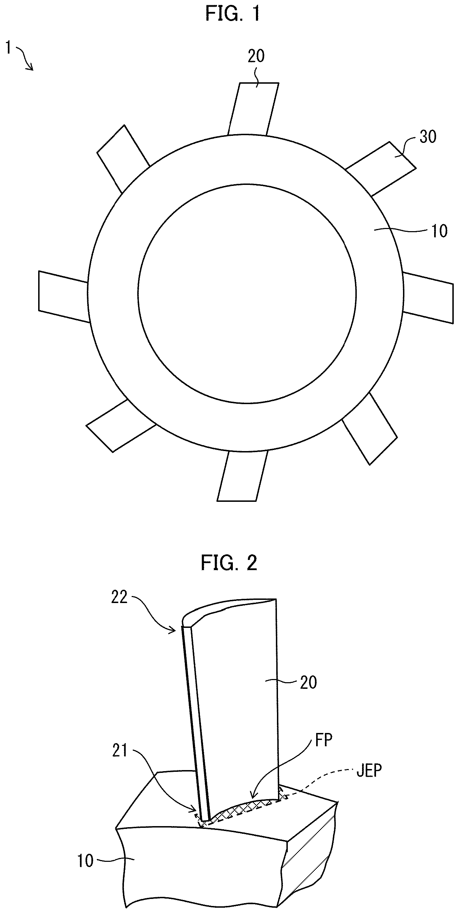

Fig. 1 is a plan view schematically illustrating a welded shaped body 1 in the present embodiment. Fig. 2 is a perspective view illustrating, in an enlarged manner, a part of the welded shaped body 1 illustrated in Fig. 1.

As illustrated in Figs. 1 and 2, the welded shaped body 1 includes a disk part (first welding target member) 10 and a first blade part (second welding target member) 20 and a second blade part (third welding target member) 30 that are each welded to the disk part 10 by linear friction welding.

In order to make illustration and description of the welded shaped body 1 plain, Fig. 1 schematically illustrates a structure in a simplified manner. In an example illustrated in Fig. 1, eight blade parts are welded to the disk part 10 by the linear friction welding, and the first blade part 20 and the second blade part 30 may be each any one of the eight blade parts. The first blade part 20 and the second blade part 30 may have an identical shape, and may be made of an identical material. The number of blade parts included in the welded shaped body 1 may be set as appropriate and is not particularly limited, provided that the welded shaped body 1 does not lose a function of the bladed disk.

In the welded shaped body 1 in the present embodiment, the first blade part 20 and the second blade part 30 are each a structure-controlled material that is produced under structural control so as to have a homogeneous material structure (metal structure). This structure-controlled material will be described below in detail. The disk part 10 may be formed from a material of a type identical to or different from the type of the material of each of the first blade part 20 and the second blade part 30. The disk part 10 may be the structure-controlled material. The advantages of the disk part 10 in the welded shaped body 1 will be described below in detail.

The welded shaped body 1 has, at a boundary between the first blade part 20 and the disk part 10, a friction welded portion FP formed by the friction welding. In the vicinity of the friction welded portion FP, a welding affecting portion JEP that has an area larger than that of an end surface of the first blade part 20 is present on a surface layer of the disk part 10. This welding affecting portion JEP is formed in the process of producing the welded shaped body 1. A method for producing the welded shaped body 1 will be described below in detail.

The first blade part 20 has a first end portion 21 that continues to the friction welded portion FP and a second end portion 22 that is located on a side far from the disk part 10. Since the first blade part 20 is the structure-controlled material, the material structure in the first end portion 21 and the material structure in the second end portion 22 are equivalent to each other. Note that, in the present specification, description of the first blade part 20 also applies to the second blade part 30, unless otherwise stated. Therefore, description that has been given will not be repeatedly given regarding the second blade part 30. Note also that, for plain description, the following description is given with attention paid to the part including the disk part 10 and the first blade part 20, but also applies to the second blade part 30, unless otherwise stated.

The advantages of the welded shaped body 1 in the present embodiment are described below together with the outline of findings on the invention that the inventors of the present invention obtained.

### (Outline of findings on the invention)

Conventionally, various studies have been conducted on the cold-dwell fatigue properties of titanium alloys such as Ti-6Al-4V. A titanium alloy can contain α and β phases, and can contain various equiaxed and oriented structures (crystal textures) due to an effect in a production process. An oriented α-phase aggregate (aggregate of α grains) is referred to as an α colony. Regarding an effect that a microstructure of a titanium alloy has on cold-dwell fatigue properties, it has been reported that the cold-dwell fatigue properties are likely to deteriorate in a case where the microstructure has an α colony that is oriented in the direction of application of a stress.

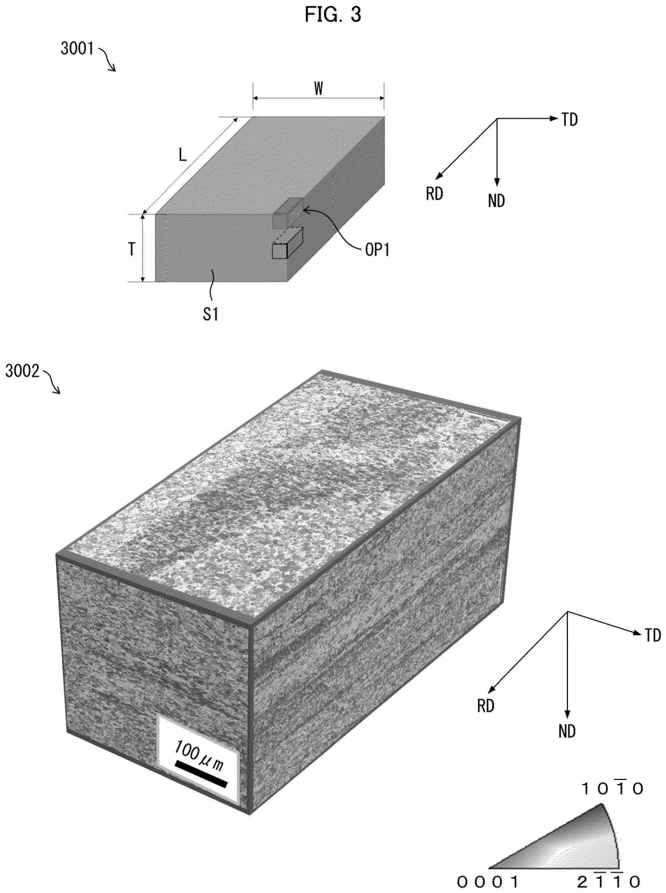

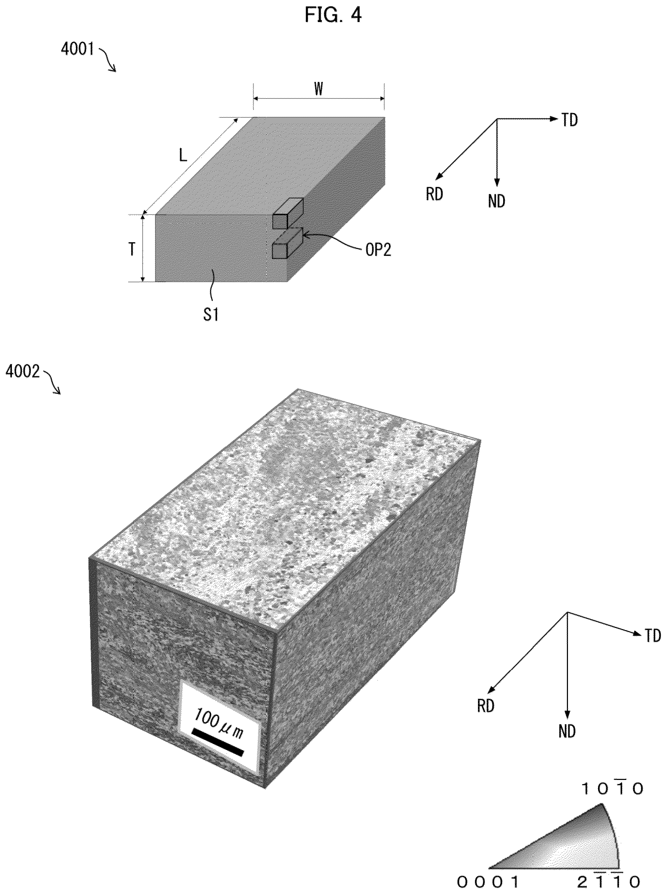

The inventors of the present invention investigated material structures in surface layer portions of forged materials made of titanium alloys and the material structures in central portions of the forged materials. As a result, the inventors of the present invention obtained findings that an α colony was present in a relatively large amount in a central portion of a forged material having, for example, a thickness of approximately 50 mm. A result of a confirmation test for the findings will be described below with reference to Figs. 3 and 4.

Fig. 3 illustrates a three-dimensional inverse pole figure (IPF) map obtained by analyzing a result of observing, by an SEM electron backscatter diffraction (SEM-EBSD) method, a surface layer portion of a forged material made of a titanium alloy. Fig. 4 illustrates a three-dimensional IPF map obtained by analyzing a result of observing, by an SEM-EBSD method, a middle portion of the forged material made of the titanium alloy in a thickness direction. Note that, on a rolling direction (RD) surface, a normal direction (ND) surface, and a transverse direction (TD) surface, coloring regarding crystal orientations are based on orientations viewed from an RD direction. The crystal orientations can be read with reference to a color code illustrated in each of the drawings. Note that, in each of Figs. 3 and 4, the definitions of three directions (RD, ND, and TD) in a general rolled material that are perpendicular to each other are used in order to specify spatial directions. That is, regarding a sheet-like forged material, a direction that is normal to a sheet surface can be set as the ND (first direction), a direction that is along the width of the sheet (or a direction that is arbitrarily selected in the in-plane direction of the sheet surface) can be set as the TD (second direction), and a direction that is perpendicular to the ND and the TD can be set as the RD (third direction).

In examples illustrated in Figs. 3 and 4, the forged material that is made of Ti-6Al-4V and that has a width W of 135 mm, a length L of 210 mm, and a thickness T of 50.5 mm was used as a sample material S1. The chemical composition of the sample material S1 is shown in Table 1. A drawing denoted by a reference numeral 3001 in Fig. 3 schematically illustrates an observed portion OP1 in the sample material S1. A drawing denoted by a reference numeral 3002 in Fig. 3 illustrates the three-dimensional IPF map of the observed portion OP1. A drawing denoted by a reference numeral 4001 in Fig. 4 schematically illustrates an observed portion OP2 in the sample material S1. A drawing denoted by a reference numeral 4002 in Fig. 4 illustrates the three-dimensional IPF map of the observed portion OP2.

**[Table 1]**

| Chemical composition (% by mass) | | | | | | |
|---|---|---|---|---|---|---|
| Al | V | C | Fe | O | N | Ti |
| 6.08 | 4.11 | 0.023 | 0.18 | 0.113 | 0.004 | Val. |

Hereinafter, an α-phase aggregate (aggregate of α grains) that is in a material structure and that is oriented in a <0001> direction is referred to as an "α <0001> colony". As illustrated in Figs. 3 and 4, it is found that, in an orientation viewed from the RD direction, an α <0001> colony is present in an larger amount in the middle portion of the sample material S1 than in the surface layer portion of the sample material S1.

Then, as additional confirmation tests, a cyclic fatigue test and a cold-dwell fatigue test were carried out. A cold-dwell fatigue test is a fatigue test in which a tensile stress is repeatedly applied at a relatively low temperature of approximately room temperature to 200°C such that the tensile stress is held for given periods of time (a high stress state continues for certain periods of time).

Two test pieces each having a width of 20 mm, a length of 64 mm, and a thickness of 5 mm were cut out from the surface layer portion (a portion corresponding to the observed portion OP1) of the sample material S1. The two test pieces were arranged such that the rolling directions RD thereof were aligned with each other, and then end surfaces of the two test pieces were welded by linear friction welding. In this manner, a fatigue test material A was prepared. Further, two test pieces each having a width of 20 mm, a length of 64 mm, and a thickness of 5 mm were cut out from the middle portion (a portion corresponding to the observed portion OP2) of the sample material S1. The two test pieces were arranged such that the rolling directions RD thereof were aligned with each other, and then end surfaces of the two test pieces were welded by linear friction welding. In this manner, a fatigue test material B was prepared. As another fatigue test material, a forged material that was made of Ti-6Al-4V (identical to the types of the fatigue test materials A and B) and that had a thickness of 6 mm was prepared. Two test pieces each having a width of 20 mm, a length of 64 mm, and a thickness of 5 mm were cut out from the forged material. The two test pieces were arranged such that the rolling directions RD thereof were aligned with each other, and then end surfaces of the two test pieces were welded by linear friction welding. In this manner, a fatigue test material C was prepared. A pressure applied to each of the fatigue test materials A to C during the linear friction welding was set to 550 MPa.

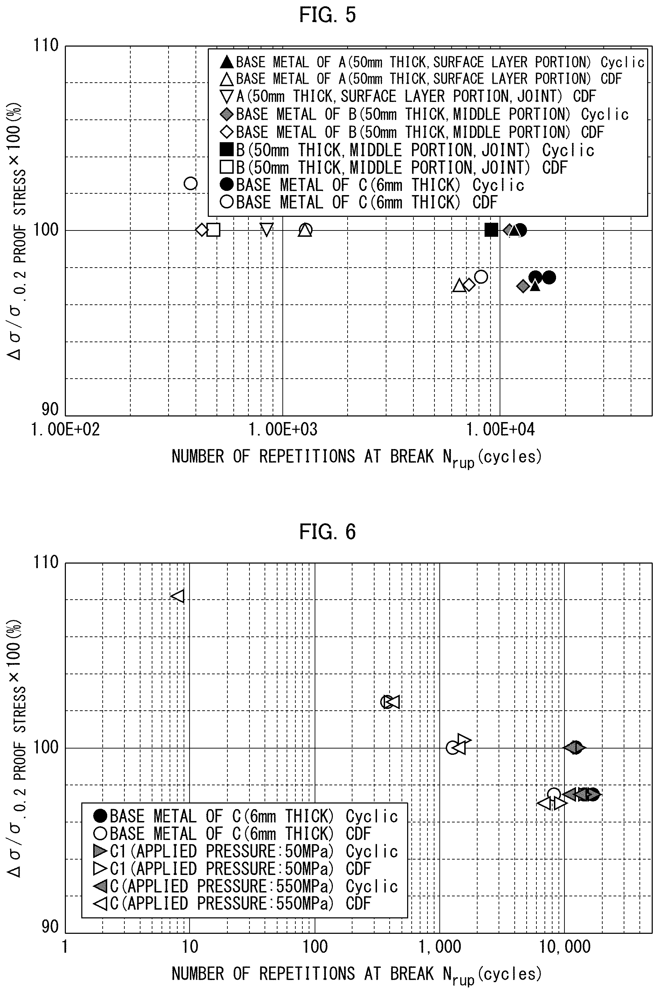

Fig. 5 shows results of carrying out the cyclic fatigue test and the cold-dwell fatigue test with respect to each of the fatigue test materials A to C and each of base metals of the fatigue test materials A to C (for the fatigue test material C, see also Fig. 6 described below). Note, here, that the base metals of the fatigue test materials A and B each mean a portion of the sample material S1 from which the test pieces were cut out, that is, the base metal of the fatigue test material A means the surface layer portion of the sample material S1, and the base metal of the fatigue test material B means the middle portion of the sample material S1.

In Fig. 5, the horizontal axis indicates the number of repetitions at a time when a test target material broke as a result of repeated application of a tensile stress to the test target material. The vertical axis indicates a value (shown in percentage) obtained by normalizing the applied maximum stress with a 0.2% proof stress. The direction of application of the stress (loading direction LD) in each of the cyclic fatigue test and the cold-dwell fatigue test was set to the above-described rolling direction RD (see Figs. 3 and 4). In the cyclic fatigue test (abbreviated as Cyclic in Fig. 5), a period of time for which the maximum stress was held was set to 0 seconds. In the cold-dwell fatigue test (abbreviated as CDF in Fig. 5), a period of time for which the maximum stress was held was set to 120 seconds. In Fig. 5, the test materials prepared by the linear friction welding are each shown as a "joint".

In Fig. 5, a result of the cold-dwell fatigue test on the fatigue test material A prepared by the linear friction welding is indicated by a hollow downward triangle. Regarding the fatigue test material B prepared by the linear friction welding, a result of the cyclic fatigue test is indicated by a black square, and a result of the cold-dwell fatigue test is indicated by a hollow square. In Fig. 5, regarding the base metal of the fatigue test material A, a result of the cyclic fatigue test is indicated by black triangles, and a result of the cold-dwell fatigue test is indicated by hollow triangles. Regarding the base metal of the fatigue test material B, a result of the cyclic fatigue test is indicated by dark gray diamonds, and a result of the cold-dwell fatigue test is indicated by hollow diamonds. Regarding the base metal (thickness: 6 mm) of the fatigue test material C, a result of the cyclic fatigue test is indicated by black circles, and a result of the cold-dwell fatigue test is indicated by hollow circles.

Fatigue resistance properties with respect to cyclic fatigue or cold-dwell fatigue can be evaluated, for example, on the basis of, in the graph illustrated in Fig. 5, a degree by which the number of repetitions (the horizontal axis of the graph) by a time when the test target material breaks decreases as the applied maximum stress (the vertical axis of the graph) increases (in other words, a regression line for a plurality of plots having an identical shape in the graph).

As illustrated in Fig. 5, the downward triangular plot (the result of the cold-dwell fatigue test on the fatigue test material A) is located near a straight line that passes through the two hollow triangular plots (the result of the cold-dwell fatigue test on the base metal of the fatigue test material A). Thus, the fatigue resistance properties (the result of the cold-dwell fatigue test) of the fatigue test material A prepared by the linear friction welding were not significantly different from the fatigue resistance properties of the base metal of the fatigue test material A.

As illustrated in Fig. 5, the black square plot (the result of the cyclic fatigue test on the fatigue test material B) is located near a straight line that passes through the two dark gray diamond plots (the result of the cyclic fatigue test on the base metal of the fatigue test material B). The hollow square plot (the result of the cold-dwell fatigue test on the fatigue test material B) is located near a straight line that passes through the two hollow diamond plots (the result of the cold-dwell fatigue test on the base metal of the fatigue test material B). Thus, the fatigue resistance properties (the results of the cyclic fatigue test and the cold-dwell fatigue test) of the fatigue test material B prepared by the linear friction welding were not significantly different from the fatigue resistance properties of the base metal of the fatigue test material B.

Note that, in the results of the fatigue tests on the fatigue test materials A to C, all breaks occurred in portions that were not welded portions obtained by the linear friction welding (that is, in base metal portions). A welded portion formed by linear friction welding can have higher strength (hardness) than a base metal portion, because, for example, a material structure is made finer. Therefore, it is considered that the life of the welded portion is unlikely to shorten due to cold-dwell fatigue.

As illustrated in Fig. 5, in a case where the fatigue tests were each carried out under a condition that the value obtained by normalizing the maximum stress with the 0.2% proof stress was not less than 100%, the life of each test target material in the result of the cold-dwell fatigue test significantly shortened as compared with the life of the each test target material in the result of the cyclic fatigue test (see all the black or dark gray plots and the hollow plots illustrated in Fig. 5). The life of the fatigue test material B shortened by the greatest degree in the result of the cold-dwell fatigue test as compared with the result of the cyclic fatigue test. This degree corresponds to a difference in life (difference in number of repetitions by the time of breakage) between the cyclic fatigue test and the cold-dwell fatigue test in a case where an identical stress condition was applied. As is clear from Fig. 5, the fatigue test material B had the greatest degree, the fatigue test material A had the next greatest degree, and the fatigue test material C had the smallest degree (see also Fig. 6, which will be described below, for the fatigue test material C). This is considered to be because an α <0001> colony that was oriented in the loading direction LD (corresponding to the rolling direction RD as described above) was present in a large amount in the fatigue test material B obtained from the test pieces cut out from the middle portion of the sample material S1. In a forged material, a microstructure is formed due to effects of a strain introduced in a forging process in a production process, a strain rate, a temperature, and the like. It is considered that an α <0001> colony is present in a large amount in a central portion into which working by forging is difficult to introduce.

Moreover, in a case where the value obtained by normalizing the maximum stress with the 0.2% proof stress was lower than 100%, the result of the cyclic fatigue test and the result of the cold-dwell fatigue test were close to each other in each test target material. This is considered to be because, with decrease in applied stress, the amount of creep occurring during periods of time for which the maximum stress was held decreased in the cold-dwell fatigue test.

Next, two test pieces obtained from a base metal identical to that of the fatigue test material C were arranged such that the rolling directions RD thereof were aligned with each other, and then end surfaces of the two test pieces were welded by linear friction welding while a pressure of 50 MPa was applied. In this manner, a fatigue test material C1 was prepared. Fig. 6 shows results of carrying out a cyclic fatigue test and a cold-dwell fatigue test with respect to each of the base metal of the fatigue test material C, the fatigue test material C, and the fatigue test material C1. The description given regarding Fig. 5 also applies to the horizontal axis and the vertical axis in Fig. 6 and fatigue test methods. Therefore, description of the horizontal axis and the vertical axis in Fig. 6 and the fatigue test methods is omitted. The base metal of the fatigue test material C is also the base metal of the fatigue test material C1 as described above, and therefore the base metal of the fatigue test material C1 is hereinafter simply referred to as the base metal of the fatigue test material C.

In Fig. 6, regarding the fatigue test material C prepared by the linear friction welding while a pressure of 550 MPa was applied, a result of the cyclic fatigue test is indicated by leftward dark gray triangles, and a result of the cold-dwell fatigue test is indicated by hollow leftward triangles. Regarding the fatigue test material C1 prepared by the linear friction welding while a pressure of 50 MPa was applied, a result of the cyclic fatigue test is indicated by rightward dark gray triangles, and a result of the cold-dwell fatigue test is indicated by hollow rightward triangles. Regarding the base metal (thickness: 6 mm) of the fatigue test material C, a result of the cyclic fatigue test is indicated by black circles, and a result of the cold-dwell fatigue test is indicated by hollow circles.

As illustrated in Fig. 6, with reference to the black and dark gray plots, it is found that the fatigue test material C and the fatigue test material C1, which were produced while respective different pressures of 550 MPa and 50 MPa were applied in the linear friction welding, each exhibited cyclic fatigue properties similar to those of the base metal of the fatigue test material C. Further, as illustrated in Fig. 6, with reference to the hollow plots, it is found that the fatigue test material C and the fatigue test material C1 each exhibited cold-dwell fatigue properties similar to those of the base metal of the fatigue test material C. Note that, in the results of these fatigue tests on the fatigue test material C and the fatigue test material C1, all breaks occurred in portions that were not welded portions obtained by the linear friction welding (that is, in base metal portions). It can be said from this fact that a welded portion obtained by linear friction welding (friction welded portion FP) has sufficiently high mechanical strength and fatigue resistance properties as compared with a base metal.

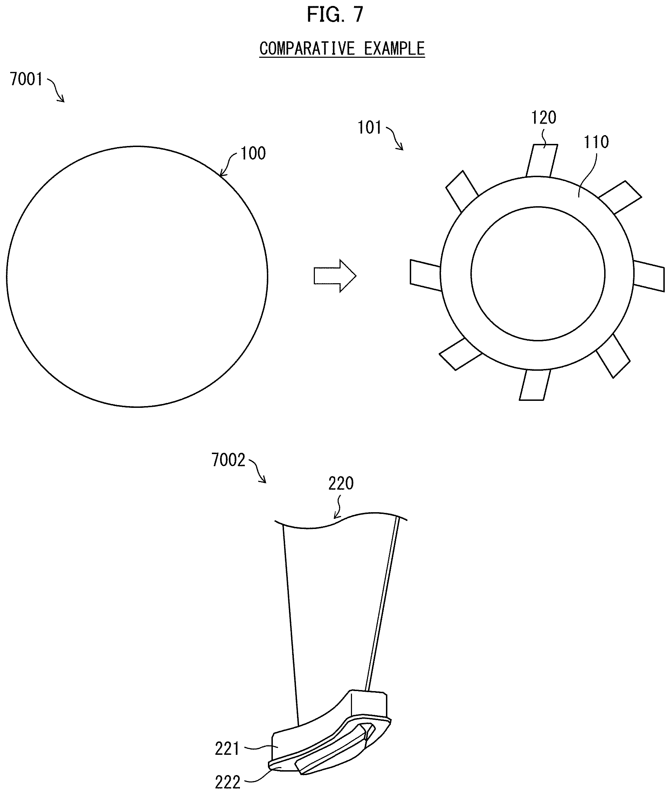

On the basis of test results as described above, the inventors of the present invention obtained the following idea. That is, it is possible to make a material structure in a forged material to be finer. However, in a case where the forged material has a large size, it is difficult to make the material structure homogeneous throughout the forged material, and an α <0001> colony is present in a relatively large amount in a middle portion of the forged material in a thickness direction. Also in a rolled material, non-uniformity can occur in a material structure in a thickness direction (in particular, as a sheet thickness increases, the non-uniformity in the thickness direction can increase). Therefore, the above statement also applies to the rolled material. Therefore, in a case where an integral bladed disk is conventionally formed by being cut out from a relatively large-sized forged material and also in a case where a welded shaped body is conventionally produced by linear friction welding with use of a rolled material or a forged material, the cold-dwell fatigue properties of the welded shaped body can significantly deteriorate due to presence of non-uniformity in a material structure as described above. A comparison between the welded shaped body 1 in accordance with the present embodiment and a conventional technique will be described below with reference to Fig. 7.

Fig. 7 is a schematic view for describing a structure of a comparative example (comparative structure). As illustrated in a drawing denoted by a reference numeral 7001 in Fig. 7, a structure that is integrally formed by being cut out from one solid block 100 is referred to as a comparative structure 101. The solid block 100 may have, for example, a disk shape, and has a certain thickness. It is assumed that the solid block 100 and the comparative structure 101 are made of a material of a type identical to that of the material of the first blade part 20 or the second blade part 30 of the welded shaped body 1 in the present embodiment, and the comparative structure 101 has a shape identical to that of the welded shaped body 1 in the present embodiment.

In this case, the comparative structure 101 has a disk part 110 and a blade part 120 that are formed by cutting, and the blade portion 120 is cut out from the vicinity of a middle portion of the solid block 100 in a thickness direction. Therefore, in the comparative structure 101, an α <0001> colony is present in a relatively large amount not only in the disk part 110 but also in the blade part 120. Accordingly, it is difficult to lengthen a cold-dwell fatigue life.

By using linear friction welding, it is possible to make a welding target member relatively small-sized in the step of producing the welding target member, and therefore it is possible to easily carry out control for making a structure of a base metal uniform. Therefore, in the welded shaped body 1 in the present embodiment, it is possible to lengthen the cold-dwell fatigue life of each of the disk part 10 and the first blade part 20, by using a welding target member having a structure of a base metal that is made uniform.

Further, by using linear friction welding, it is possible to form a friction welded portion that has fatigue properties equivalent to or greater than those of a base metal. In the welded shaped body 1, deterioration in fatigue resistance properties are unlikely to occur in the friction welded portion FP. By using, as the first blade part 20, the structure-controlled material that has a uniform material structure, it is possible to, for example, improve the cold-dwell fatigue properties of the entire bladed disk. Further, by adjusting a welding pressure, it is possible to control the properties (microstructure) of the friction welded portion. For example, in a case where the welded shaped body 1 formed by the linear friction welding at a relatively high welding pressure exhibits relatively excellent tensile properties under room temperature, it is possible to comprehensively optimize the cold-dwell fatigue life and the other properties by adjusting the welding pressure.

Conventionally, techniques of forming bladed disks with use of linear friction welding have been studied. However, the objects of the techniques are to, for example, reduce a waste of materials and shorten working times. Thus, shortening of a cold-dwell fatigue life that is caused by the non-uniformity of a material structure, as described above, has not been considered. Therefore, as illustrated in a drawing denoted by a reference numeral 7002 in Fig. 7, a bladed disk has been produced by welding a blade part 220, formed in advance by forging or the like, to the disk part 10 by linear friction welding.

Generally, the blade part 220 has a holding part 221 and a flange 222. The holding part 221 and the flange 222 are provided so that the blade part 220 is held by a friction welding machine and a pressing force is appropriately applied during linear friction welding. The holding part 221 and the flange 222 are cut and removed after the linear friction welding.

In this case, the blade part 220 is forged such that the flange 222 which is relatively thick is formed. Therefore, in the blade part 220, an α <0001> colony can present in a relatively large amount in a middle portion of the flange 222. Therefore, it can be difficult to lengthen the cold-dwell fatigue life of the bladed disk formed with use of the blade part 220.

In contrast, in the welded shaped body 1 in the present embodiment, it is possible to apply, for example, a structure-controlled rolled material to the first blade part 20. In a rolled material, it is possible to control a material structure by adjusting a rolling reduction ratio. By forming a welded shaped body by linear friction welding with use of a thin rolled material (that is, having a relatively high rolling reduction ratio), it is possible to improve the cold-dwell fatigue properties of the welded shaped body. As described above, a material produced so as to have a uniform material structure (in particular, so as to have a uniform material structure in a thickness direction) is referred to as a structure-controlled material. The structure-controlled material may be a relatively small-sized forged material or rolled material. In the relatively small-sized forged material, it is possible to easily reduce a possibility that a difference arises in material structure between a surface layer portion and a middle portion.

Further, for example, in a case where the first blade part 20 is partially damaged, it is also possible to use a structure-controlled material as a repair material for repairing such a damaged portion. In this case, the welded shaped body 1 after repair has high fatigue resistance properties.

### (Details of welded shaped body)

In contrast to the comparative example as described above, the welded shaped body 1 in accordance with the present embodiment is produced as follows on the basis of the above-described findings.

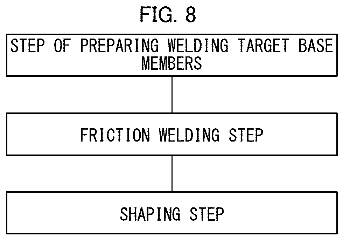

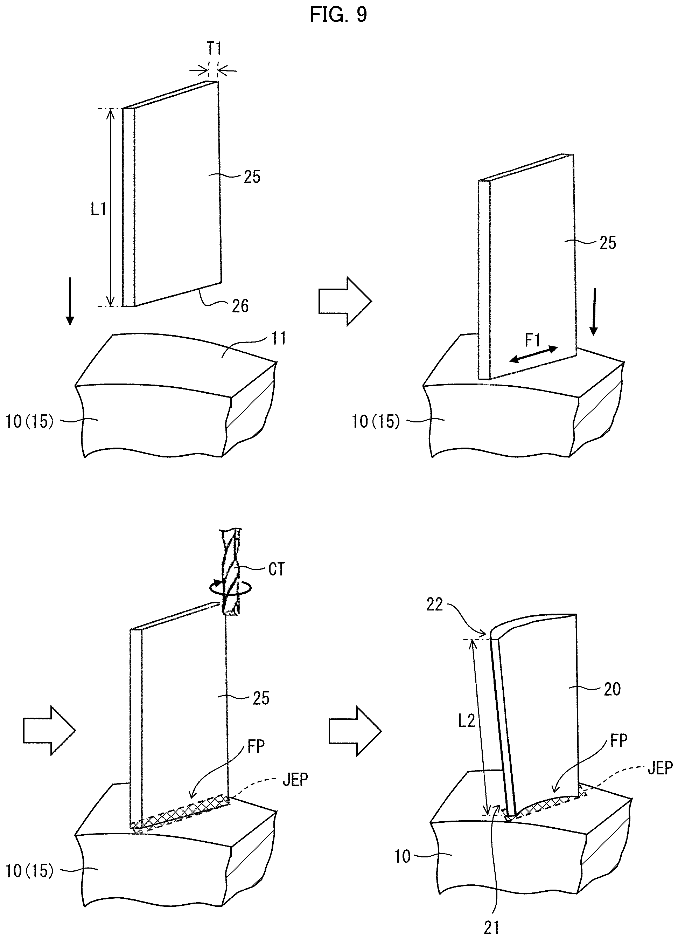

Fig. 8 is a flowchart illustrating an example of a method for producing the welded shaped body 1 in the present embodiment. Fig. 9 is a perspective view schematically illustrating an example of the method for producing the welded shaped body 1.

As illustrated in Figs. 8 and 9, the method for producing the welded shaped body 1 includes (i) a step of preparing a disk part base member (first welding target base member) 15, a first blade part base member (second welding target base member) 25, and a second blade part base member (third welding target base member, not illustrated) and (ii) a friction welding step of welding these members by linear friction welding. The disk part base member 15 is a member which is a basis of the disk part 10. The first blade part base member 25 is a member which is a basis of the first blade part 20. The following description of the first blade part base member 25 also applies to the second blade part base member. Therefore, description of the second blade part base member is omitted.

Specifically, in an example illustrated in Fig. 9, the disk part base member 15 that has a first surface 11 and the first blade part base member 25 that has a second surface 26 are prepared. The disk part base member 15 only needs to have the first surface 11, and may have a shape identical to or different from that of the disk part 10. Similarly to production of the first blade part 20, the disk part 10 may be formed from the disk part base member 15, and the disk part base member 15 may have a shape similar to that of the disk part 10 (near net shape) or may have a shape identical to or substantially identical to that of the disk part 10 (net shape).

The first blade part base member 25 and the second blade part base member are each the structure-controlled material, and may be, for example, a relatively small-sized forged material or rolled material. A material structure in the second surface 26 of the first blade part base member 25 is identical to that in any other portion of the first blade part base member 25. The second blade part base member has a third surface. A material structure in the third surface is identical to that in any other portion of the second blade part base member.

A lengthwise direction of the first blade part base member 25 may be a direction away from the disk part 10 in the final welded shaped body 1, in other words, a radial direction with respect to the rotation axis direction of the bladed disk that is the welded shaped body 1 in the present embodiment. In the present embodiment, the length L1 of the first blade part base member 25 in the lengthwise direction may correspond to the length of a blade in a general bladed disk, and is not particularly limited.

The thickness T1 of the first blade part base member 25 may be, for example, not less than 3 mm and not more than 30 mm. The thickness T1 may be not less than 3 mm and not more than 20 mm, and may be not less than 3 mm and less than 10 mm. In the case of a rolled material, as the thickness T1 decreases, it becomes easier to make the material structure in the thickness direction uniform, because, for example, the rolled material has a relatively higher rolling reduction ratio. In the case of a forged material, as the thickness T1 decreases, it is possible to more easily reduce a possibility that a difference occurs in material structure between a surface layer portion and a middle portion. As described above, in a forged material having a thickness of, for example, approximately 50 mm, an α colony is present in a relatively large amount in a central portion in a thickness direction (the forged material has a material structure that is non-uniform in the thickness direction). Therefore, a cold-dwell fatigue life in the central portion can be relatively short (see Figs. 3 to 5). On the other hand, as described above, since a forged material having a thickness of, for example, approximately 6 mm has a material structure that is uniform in a thickness direction, a cold-dwell fatigue life is relatively long, in other words, a degree by which the life shortens is relatively small in a result of a cold-dwell fatigue test result as compared with a result of a cyclic fatigue test result (see Fig. 5).

For example, in a case where a rolled material is used for the first blade part base member 25, the lengthwise direction of the first blade part base member 25 can be identical to a rolling direction (RD direction). In this case, the uniformity of the material structure of the first blade part base member 25 can be high in the lengthwise direction. On the other hand, as the thickness T1 increases, the uniformity of the material structure of the first blade part base member 25 can be lower in a thickness T1 direction.

If a relatively large-sized forged material is used for the first blade part base member 25, an internal structure is affected by the direction of working in forging, and non-uniformity can occur in the material structure at least in the thickness T1 direction. In contrast, in a case where a relatively small-sized forged material is used for the first blade part base member 25, an internal structure is affected by the direction of working in forging, but a possibility that non-uniformity occurs in the material structure in the thickness T1 direction can be reduced.

It is possible to control the material structure of the first blade part base member 25, for example, by increasing the degree of working in hot working. In both forging and rolling, the degree of working in the hot working can be evaluated on the basis of the rate of reduction in area of a cross section before and after the working, as in the following formula: Rate of reduction in area of cross section = (1 - area of cross section after working / area of cross section before working) × 100 (%).

The rate of reduction in area of the cross section of the first blade part base member 25 may be not less than 50% and not more than 90% and may be not less than 70% and not more than 90%. The first blade part base member 25 has a uniform material structure in the thickness T1 direction.

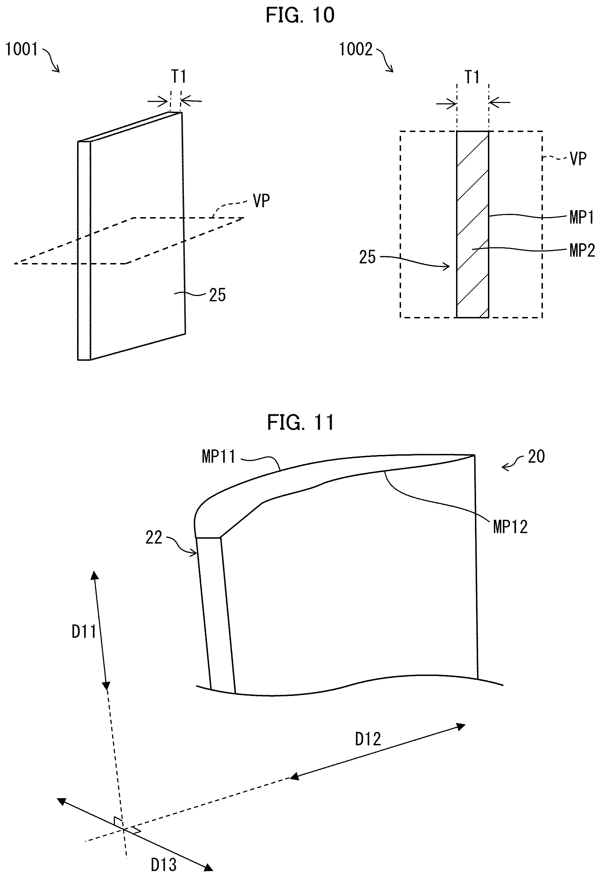

Fig. 10 is for describing the uniformity of the material structure of the first blade part base member 25 in the thickness T1 direction. As illustrated in a drawing denoted by a reference numeral 1001 in Fig. 10, for example, a cross section in a case where the first blade part base member 25 is cut at a virtual plane VP that is parallel to the second surface 26 (see Fig. 9) is considered. As illustrated in a drawing denoted by a reference numeral 1002 in Fig. 10, on the cross section, an outer surface portion of the first blade part base member 25 that is located in a direction perpendicular to a sliding direction F1 in the linear friction welding (see Fig. 9), in other words, the thickness T1 direction of the first blade part base member 25 is set as a measurement portion MP1. Further, on the cross section, a middle portion inside the first blade part base member 25 is set as a measurement portion MP2.

An inverse pole figure map is obtained by carrying out electron backscatter analysis measurement with respect to each of the measurement portions MP1 and MP2. In the inverse pole figure map based on an orientation viewed from the lengthwise direction of the first blade part base member 25 (the RD direction in a case where the first blade part base member 25 is a rolled material), the maximum value of the thickness (size in the thickness T1 direction) of an α <0001> colony in each of the measurement portions MP1 and MP2 of the first blade part base member 25 may be not more than 100 µm and may be not more than 50 µm. The lower limit of the maximum value of the thickness (size in the thickness T1 direction) of the α <0001> colony is not particularly limited, but may be, for example, 10 µm. The thickness of the α <0001> colony can be said to be the length of the α <0001> colony in the thickness T1 direction that is perpendicular to both the lengthwise direction of the first blade part base member 25 and the sliding direction F1 (the thickness T1 direction can also be said to be an ND direction or a direction that is normal to a sheet surface).

In the present embodiment, an α colony means an aggregate of α grains in which adjacent α grains are oriented in a substantially identical direction. The phrase "adjacent α grains are oriented in a substantially identical direction" means that a difference between orientations of the adjacent α grains, for example, a difference between directions normal to (0001) planes of the adjacent α grains is not more than 20 degrees. In the α <0001> colony, a difference between the c-axis [0001] direction of each of a plurality of adjacent α grains and the lengthwise direction of the first blade part base member 25 (the RD direction in a case where the first blade part base member 25 is a rolled material) falls within a range up to 20 degrees. In a case where the first blade part base member 25 is a rolled material, the α <0001> colony may have a shape that is elongated in the RD direction or may have a sheet-like shape.

For example, as described above, in a forged material having a thickness of approximately 50 mm, an α <0001> colony is relatively thick and is present in a relatively large amount in a central portion in a thickness direction. Thus, cold-dwell fatigue properties can deteriorate. In contrast, as described above, in the first blade part base member 25, both the measurement portions MP1 and MP2 do not contain an α <0001> colony in which the maximum value of the thickness exceeds 100 µm. Thus, it is possible to effectively prevent the life of the welded shaped body 1, which is produced with use of the first blade part base member 25, from shortening due to cold-dwell fatigue.

Then, in the friction welding step, the second surface 26 of the first blade part base member 25 is brought into contact with the first surface 11 of the disk part 10, and the first blade part base member 25 is welded to the disk part 10 by the linear friction welding. Furthermore, the third surface of the second blade part base member is brought into contact with the first surface 11 of the disk part 10, and the second blade part base member is welded to the disk part 10 by the linear friction welding. Thus, the friction welded portion FP is formed, by the linear friction welding, at each of a boundary between the disk part 10 and the first blade part base member 25 and a boundary between the disk part 10 and the second blade part base member. It can be identified that the friction welded portion FP is a welded portion formed by linear friction welding, for example, by carrying out cross-section observation. Further, in the vicinity of the friction welded portion FP, the welding affecting portion JEP may be formed on a surface layer portion of the disk part 10. The welding affecting portion JEP is different (not identical) in structure state from the base metal of the disk part 10 due to an effect of the linear friction welding. Note that it is also possible to simultaneously weld the first blade part base member 25 and the second blade part base member to the disk part 10.

Next, in the method for producing the welded shaped body 1, a shaping step of shaping, by cutting, each of the first blade part base member 25 and the second blade part base member that each have been welded by the linear friction welding may be further carried out. For example, the shaping step can be carried out with use of a cutting tool CT. Examples of the cutting tool CT include end mills. In the shaping step, the friction welded portion FP may also be cut together with each of the first blade part base member 25 and the second blade part base member. In this manner, the first blade part 20 is formed. Note that the first blade part 20 produced from the first blade part base member 25 has properties equivalent to those of the first blade part base member 25 described above. This can be easily understood with reference to the description above.

At least a part of the welding affecting portion JEP in the disk part 10 does not need to be in contact with the first blade part 20. The entire outer surface (a surface exposed to the outside) of the friction welded portion FP may be a worked surface obtained by cutting. The outer surface of the first blade part 20 (and the outer surface of the second blade part 30) may be cut so as to continue to the worked surface of the friction welded portion FP.

The first blade part 20 is formed by cutting the first blade part base member 25 after the first blade part base member 25, which is a rolled material or a forged material, is welded to the disk part 10 by the linear friction welding. A distance L2 from the first end portion 21 (see Fig. 2) to the second end portion 22 is shorter than the length L1 of the first blade part base member 25.

In the welded shaped body 1 in the present embodiment, the first blade part 20 has a homogeneous material structure. Therefore, in a cold-dwell fatigue test, the first blade part 20 exhibits a cold-dwell fatigue life longer than that of the blade part 120 in the comparative structure 101 described above. The cold-dwell fatigue test may be a dwell fatigue test at room temperature or may be a dwell fatigue test at a temperature of approximately room temperature to 200°C. This also applies to the second blade part 30. The second blade part 30 in the welded shaped body 1 has a homogeneous material structure. In a cold-dwell fatigue test, the second blade part 30 exhibits a cold-dwell fatigue life longer than that of a portion of the comparative structure 101 which portion corresponds to the second blade part 30, the comparative structure 101 being made of the material of a type identical to that of the material of the second blade part 30.

In the first blade part 20, the material structure in the first end portion 21 and the material structure in the second end portion 22 may be homogeneous with each other. In the first blade part 20, for example, a difference between the mode of a crystal grain size distribution in the material structure in the first end portion 21 and the mode of a crystal grain size distribution in the material structure in the second end portion 22 may be not more than ±5%. In other words, the ratio of the mode of the crystal grain size distribution in the material structure in the second end portion 22 to the mode of the crystal grain size distribution in the material structure in the first end portion 21 may be not less than 0.95 and not more than 1.05.

In the first blade part 20, for example, a percentage difference between an average crystal grain size in the material structure in the first end portion 21 and an average crystal grain size in the material structure in the second end portion 22 may be not more than 5%. The percentage difference is determined by dividing an absolute value of a difference between the average crystal grain size in the material structure in the first end portion 21 and the average crystal grain size in the material structure in the second end portion 22 by an average value of these average crystal grain sizes.

The crystal grain size distribution and the average crystal grain size in the material structure can be measured with use of, for example, SEM-EBSD. In an α colony as described above, an entire aggregate larger than an actual α grain is discriminated as one crystal grain, in an inverse pole figure map obtained from a measurement result of SEM-EBSD. Therefore, as the α colony is present in a larger amount, the mode (mode value) of the crystal grain size distribution and the average crystal grain size can be greater.

As described above, in the first blade part 20, there is no great difference between the first end portion 21 and the second end portion 22 in each of the mode of the crystal grain size distribution and the average crystal grain size, and the material structure in the first end portion 21 and the material structure in the second end portion 22 are equivalent to each other. That is, in the first blade part 20, the α colony is present in a relatively small amount in the first end portion 21 and the second end portion 22.

In the first blade part 20, the randomness of crystal orientations in the second end portion 22 in the thickness direction may be equal in an inverse pole figure map obtained by carrying out SEM-EBSD measurement with respect to the second end portion 22. Fig. 11 is for describing the uniformity of the material structure in the first blade part 20 in the thickness direction. As illustrated in Fig. 11, a portion on one surface of the second end portion 22 of the first blade part 20 in the thickness direction is set as a first measurement target portion MP11, and a portion on the other surface of the second end portion 22 in the thickness direction is set as a second measurement target portion MP12.

Note, here, that, regarding the first blade part 20, a direction from the first end portion 21 toward the second end portion 22 is set as a first direction D11, and a direction in which the friction welded portion FP extends, that is, a direction parallel to the above-described sliding direction F1 is set as a second direction D12. A direction perpendicular to both the first direction D11 and the second direction D12 is set as a thickness direction D13 of the first blade part 20. The first blade part 20 has the homogeneous material structure, and, for example, the following can be said. That is, by carrying out SEM-EBSD measurement with respect to each of the first measurement target portion MP11 and the second measurement target portion MP12, the inverse pole figure map is obtained. In the first blade part 20, the maximum value of the thickness (size in the thickness direction D13) of the α <0001> colony in each of the material structure in the first measurement target portion MP11 and the material structure in the second measurement target portion MP12 may be not more than 100 µm or may be not more than 50 µm, in the inverse pole figure map based on an orientation viewed from the first direction D11. The lower limit of the maximum value of the thickness (size in the thickness direction D13) of the α <0001> colony is not particularly limited, but may be, for example, 10 µm. Thus, for the same reason as that described above regarding the first blade part base member 25, it is possible to effectively prevent the life of the welded shaped body 1 from shortening due to cold-dwell fatigue.

The maximum value of the distance between the first measurement target portion MP11 and the second measurement target portion MP12 in the thickness direction D13 (the maximum value of the thickness of the second end portion 22) is lower than a value of the thickness T1 of the first blade part base member 25 described above, and therefore, for example, may be not less than 3 mm and not more than 30 mm, may be not less than 3 mm and not more than 20 mm, and may be not less than 3 mm and less than 10 mm.

In the welded shaped body 1 in the present embodiment, the first blade part 20 contains the titanium alloy. In the first blade part 20, an area ratio of the α <0001> colony (aggregate of α crystal grains) in each of the first measurement target portion MP11 and the second measurement target portion MP12 may be not more than 30% or may be not less than 1% and not more than 20%, in the inverse pole figure map. In the welded shaped body 1 in which the α <0001> colony is present in a relatively small amount, the life is effectively prevented from shortening due to cold-dwell fatigue. In contrast, in a case where the area ratio of the α <0001> colony is more than 30%, the life can significantly shorten due to cold-dwell fatigue.

### (Other configurations)

(a) The first blade part 20 and the second blade part 30 may each have Vickers hardness (hardness) lower than that of the friction welded portion FP.

For example, in the friction welding step, the second surface 26 is brought into contact with the first surface 11 so that a welding target interface is formed, and then the disk part 10 and the first blade part base member 25 are repeatedly slid along an identical path in a state where a pressure is applied substantially perpendicularly to the first surface 11. The friction welded portion FP may be formed by controlling a welding temperature at the welding target interface by adjusting the pressure. Regarding detailed conditions for the linear friction welding, it is possible to refer to, for example, Japanese Patent Application Publication Tokukai No. 2018-122344. Note that the second surface 26 of the first blade part 20 and the third surface of the second blade part 30 may be brought into contact with the first surface 11, and then both the first blade part 20 and the second blade part 30 may be welded to the disk part 10.

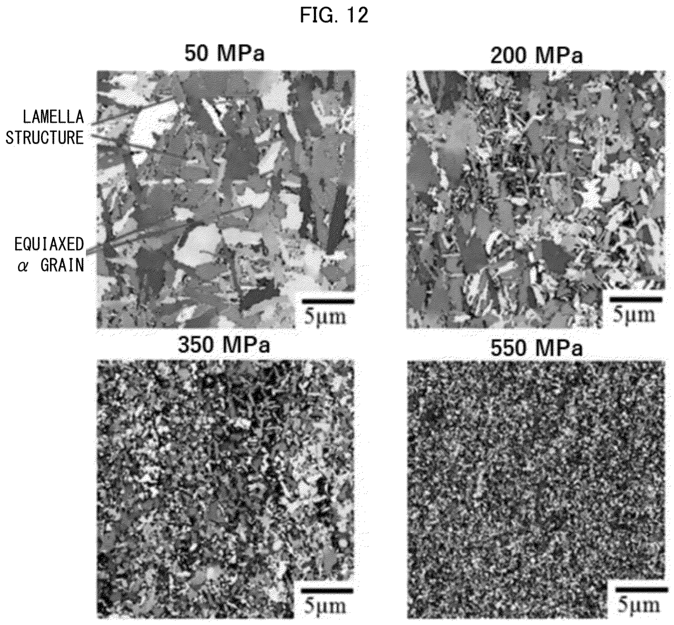

Fig. 12 is for describing a relationship between a material structure of the friction welded portion FP and the welding pressure. In a case where the welding pressure is varied between 50 MPa and 550 MPa, a higher welding pressure makes it possible to cause the temperature of the welded portion to be relatively lower during the linear friction welding. As a result, as illustrated in Fig. 12, it is found that a higher welding pressure makes the material structure of the friction welded portion FP finer.

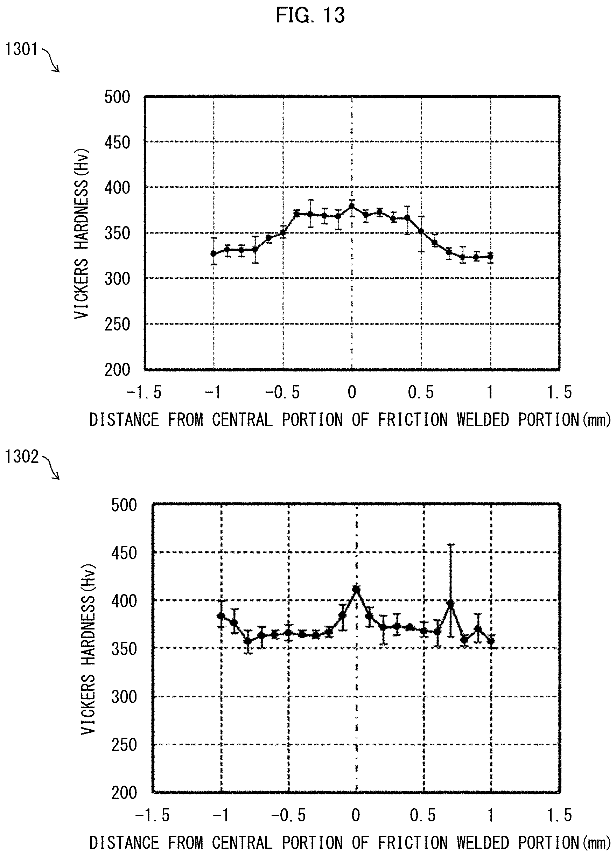

Fig. 13 is for describing a relationship between the Vickers hardness of the friction welded portion FP and the welding pressure. Fig. 13 shows a relationship between the Vickers hardness and a distance from the central portion of the friction welded portion FP in a direction perpendicular to a welding line, with regard to each of the above-described fatigue test material C1 (thickness: 6 mm, applied pressure: 50 MPa) and the above-described fatigue test material C (thickness: 6 mm, applied pressure: 550 MPa). A graph denoted by a reference numeral 1301 in Fig. 13 shows a measurement result obtained with respect to the fatigue test material C1. A graph denoted by a reference numeral 1302 in Fig. 13 shows a measurement result obtained with respect to the fatigue test material C.

As shown in Fig. 13, the fatigue test material C has higher mechanical properties than the fatigue test material C1. However, also in the fatigue test material C1, the friction welded portion FP had Vickers hardness higher than that of the base metal, and, as described above, had good cold-dwell fatigue properties. Thus, it is possible to control the material structure of the friction welded portion FP by adjusting the applied pressure, and also possible to widen a range from which a pressure condition for the linear friction welding is selected.

(b) Also in various metal materials different from titanium alloys, crystal grains having similar crystal orientations aggregate into a colony structure. In a case where a colony size increases, cold-dwell fatigue properties may deteriorate. For example, in ferritic stainless steel, a colony structure can cause an uneven pattern (ridging) on a surface after press shaping.

According to forming the welded shaped body 1 with use of the structure-controlled material, also in a case where a metal material that is different from titanium alloys is used, it is possible to prevent the life from shortening due to cold-dwell fatigue.

(c) The first blade part base member 25 may be one rolled material or one forged material. Alternatively, the first blade part base member 25 may be formed by welding a plurality of small-sized welding target members by linear friction welding. According to the findings described in the above embodiment, also in a case where a relatively large-sized first blade part base member 25 is produced by welding a plurality of small-sized welding target members by linear friction welding, the following can be said. A friction welded portion that is in the first blade part base member 25 and that is formed by welding the plurality of small-sized welding target members by the linear friction welding has excellent mechanical properties and good cold-dwell fatigue properties, as compared with base metals of the welding target members. Therefore, a welded shaped body 1 produced with use of such a first blade part base member 25 has an effect similar to that of the welded shaped body 1 in the above-described embodiment. The first blade part base member 25 may have a shape similar to that of the first blade part 20 (near net shape).

Aspects of the present invention can also be expressed as follows:
A welded shaped body in a first aspect of the present invention is a welded shaped body including a first welding target member and a second welding target member that is welded to the first welding target member by linear friction welding, wherein in a case where a structure that is integrally formed by being cut out from one solid block made of a material of a type identical to a type of a material of the second welding target member and that has a shape identical to a shape of the welded shaped body is referred to as a comparative structure, the second welding target member has a material structure that is homogeneous and that, in a cold-dwell fatigue test, exhibits a cold-dwell fatigue life longer than a cold-dwell fatigue life of a portion of the comparative structure which portion corresponds to the second welding target member.

The welded shaped body in a second aspect of the present invention is configured to, in the first aspect, further include a friction welded portion that is formed at a boundary between the first welding target member and the second welding target member by the linear friction welding, wherein the second welding target member has a first end portion that continues to the friction welded portion and a second end portion that is located on a side far from the first welding target member, and a percentage difference between an average crystal grain size in the material structure in the first end portion and an average crystal grain size in the material structure in the second end portion is not more than 5%.

The welded shaped body in a third aspect of the present invention is configured to, in the first or second aspect, further include a friction welded portion that is formed at a boundary between the first welding target member and the second welding target member by the linear friction welding, wherein: the second welding target member has a first end portion that continues to the friction welded portion and a second end portion that is located on a side far from the first welding target member; and in a case where (i) a direction that is perpendicular to a first direction from the first end portion toward the second end portion and that is perpendicular to a second direction in which the friction welded portion extends is referred to as a thickness direction of the second welding target member, (ii) a portion on one surface of the second end portion in the thickness direction is set as a first measurement target portion, and (iii) a portion on the other surface of the second end portion in the thickness direction is set as a second measurement target portion, the second welding target member is configured such that a colony in each of the material structure in the first measurement target portion and the material structure in the second measurement target portion has a size of not more than 100 µm in the thickness direction, in an inverse pole figure map obtained by carrying out electron backscatter analysis measurement with respect to each of the first measurement target portion and the second measurement target portion.

The welded shaped body in a fourth aspect of the present invention is configured such that, in any one of the first to third aspects, the second welding target member contains a titanium alloy, and an area ratio of an aggregate of α crystal grains in each of the first measurement target portion and the second measurement target portion is not more than 30% in the inverse pole figure map.

The welded shaped body in a fifth aspect of the present invention is configured such that, in any one of the first to fourth aspects, an entire outer surface of the friction welded portion is a worked surface obtained by cutting, and an outer surface of the second welding target member is cut so as to continue to the worked surface of the friction welded portion.

The welded shaped body in a sixth aspect of the present invention is configured such that, in any one of the first to fifth aspects, the second welding target member has Vickers hardness lower than Vickers hardness of the friction welded portion.

The welded shaped body in a seventh aspect of the present invention is configured to, in any one of the first to sixth aspects, further include a third welding target member that is welded to the first welding target member by linear friction welding, wherein in a case where a structure that is integrally formed by being cut out from one solid block made of a material of a type identical to a type of a material of the third welding target member and that has a shape identical to a shape of the welded shaped body is referred to as a second comparative structure, the third welding target member has a material structure that is homogeneous and that, in a cold-dwell fatigue test, exhibits a cold-dwell fatigue life longer than a cold-dwell fatigue life of a portion of the second comparative structure which portion corresponds to the third welding target member.

A method for producing a welded shaped body in an eighth aspect of the present invention includes a step of preparing a first welding target base member that has a first surface and a second welding target base member that has a second surface, and a friction welding step of bringing the second surface into contact with the first surface and welding the second welding target base member to the first welding target base member by linear friction welding, wherein in a case where a structure that is integrally formed by being cut out from one solid block made of a material of a type identical to a type of a material of the second welding target base member and that has a shape identical to a shape of a welded shaped body formed through the friction welding step is referred to as a comparative structure, the second welding target base member has a material structure that is homogeneous and that, in a cold-dwell fatigue test, exhibits a cold-dwell fatigue life longer than a cold-dwell fatigue life of a portion of the comparative structure which portion corresponds to the second welding target base member.

The method in a ninth aspect of the present invention is configured such that, in the eighth aspect, the second welding target base member is configured such that, in an inverse pole figure map obtained by carrying out electron backscatter analysis measurement with respect to each of (i) an outer surface portion that, on a virtual plane parallel to the second surface, is located in a thickness direction of the second welding target base member which thickness direction is perpendicular to a sliding direction in the linear friction welding and (ii) a middle portion that is located inside the second welding target base member, a colony in each of the outer surface portion and the middle portion has a size of not more than 100 µm in the thickness direction.

The method in a tenth aspect of the present invention is configured such that, in the eighth or ninth aspect, in the friction welding step, a friction welded portion is formed at a boundary between the first welding target base member and the second welding target base member by the linear friction welding, the method further comprises a shaping step of cutting the second welding target base member after the friction welding step, and in the shaping step, the friction welded portion is also cut together with the second welding target base member.

The method in an eleventh aspect of the present invention is configured such that, in any one of the eighth to tenth aspects, in the friction welding step, a friction welded portion is formed by (i) bringing the second surface into contact with the first surface so that a welding target interface is formed, (ii) repeatedly sliding, along an identical path, the first welding target base member and the second welding target base member in a state where a pressure is applied substantially perpendicularly to the first surface, and (iii) controlling a welding temperature at the welding target interface by adjusting the pressure.

### [Supplementary note]

The present invention is not limited to the embodiments, but can be altered by a skilled person in the art within the scope of the claims. The present invention also encompasses, in its technical scope, any embodiment derived by combining technical means disclosed in the above description.

### Reference Signs List

- 10: Disk part (first welding target member)
- 20: First blade part (second welding target member)
- 30: Second blade part (third welding target member)
- 100: Solid block
- 101: Comparative structure

## Claims

1. A welded shaped body comprising
a first welding target member and
a second welding target member that is welded to the first welding target member by linear friction welding, wherein
in a case where a structure that is integrally formed by being cut out from one solid block made of a material of a type identical to a type of a material of the second welding target member and that has a shape identical to a shape of the welded shaped body is referred to as a comparative structure,
the second welding target member has a material structure that is homogeneous and that, in a cold-dwell fatigue test, exhibits a cold-dwell fatigue life longer than a cold-dwell fatigue life of a portion of the comparative structure which portion corresponds to the second welding target member.

2. The welded shaped body as set forth in claim 1, further comprising
a friction welded portion that is formed at a boundary between the first welding target member and the second welding target member by the linear friction welding, wherein
the second welding target member has a first end portion that continues to the friction welded portion and a second end portion that is located on a side far from the first welding target member, and a percentage difference between an average crystal grain size in the material structure in the first end portion and an average crystal grain size in the material structure in the second end portion is not more than 5%.

3. The welded shaped body as set forth in claim 1, further comprising
a friction welded portion that is formed at a boundary between the first welding target member and the second welding target member by the linear friction welding, wherein:
the second welding target member has a first end portion that continues to the friction welded portion and a second end portion that is located on a side far from the first welding target member; and
in a case where
(i) a direction that is perpendicular to a first direction from the first end portion toward the second end portion and that is perpendicular to a second direction in which the friction welded portion extends is referred to as a thickness direction of the second welding target member,
(ii) a portion on one surface of the second end portion in the thickness direction is set as a first measurement target portion, and
(iii) a portion on the other surface of the second end portion in the thickness direction is set as a second measurement target portion,
the second welding target member is configured such that a colony in each of the material structure in the first measurement target portion and the material structure in the second measurement target portion has a size of not more than 100 µm in the thickness direction, in an inverse pole figure map obtained by carrying out electron backscatter analysis measurement with respect to each of the first measurement target portion and the second measurement target portion.

4. The welded shaped body as set forth in claim 3, wherein the second welding target member contains a titanium alloy, and an area ratio of an aggregate of α crystal grains in each of the first measurement target portion and the second measurement target portion is not more than 30% in the inverse pole figure map.

5. The welded shaped body as set forth in claim 3, wherein
an entire outer surface of the friction welded portion is a worked surface obtained by cutting, and
an outer surface of the second welding target member is cut so as to continue to the worked surface of the friction welded portion.

6. The welded shaped body as set forth in claim 3, wherein the second welding target member has Vickers hardness lower than Vickers hardness of the friction welded portion.

7. The welded shaped body as set forth in any one of claims 1 through 6, further comprising
a third welding target member that is welded to the first welding target member by linear friction welding, wherein
in a case where a structure that is integrally formed by being cut out from one solid block made of a material of a type identical to a type of a material of the third welding target member and that has a shape identical to a shape of the welded shaped body is referred to as a second comparative structure,
the third welding target member has a material structure that is homogeneous and that, in a cold-dwell fatigue test, exhibits a cold-dwell fatigue life longer than a cold-dwell fatigue life of a portion of the second comparative structure which portion corresponds to the third welding target member.

8. A method for producing a welded shaped body, comprising
a step of preparing a first welding target base member that has a first surface and a second welding target base member that has a second surface, and
a friction welding step of bringing the second surface into contact with the first surface and welding the second welding target base member to the first welding target base member by linear friction welding, wherein
in a case where a structure that is integrally formed by being cut out from one solid block made of a material of a type identical to a type of a material of the second welding target base member and that has a shape identical to a shape of a welded shaped body formed through the friction welding step is referred to as a comparative structure,
the second welding target base member has a material structure that is homogeneous and that, in a cold-dwell fatigue test, exhibits a cold-dwell fatigue life longer than a cold-dwell fatigue life of a portion of the comparative structure which portion corresponds to the second welding target base member.

9. The method as set forth in claim 8, wherein the second welding target base member is configured such that, in an inverse pole figure map obtained by carrying out electron backscatter analysis measurement with respect to each of (i) an outer surface portion that, on a virtual plane parallel to the second surface, is located in a thickness direction of the second welding target base member which thickness direction is perpendicular to a sliding direction in the linear friction welding and (ii) a middle portion that is located inside the second welding target base member, a colony in each of the outer surface portion and the middle portion has a size of not more than 100 µm in the thickness direction.

10. The method as set forth in claim 8 or 9, wherein
in the friction welding step, a friction welded portion is formed at a boundary between the first welding target base member and the second welding target base member by the linear friction welding,
the method further comprises a shaping step of cutting the second welding target base member after the friction welding step, and
in the shaping step, the friction welded portion is also cut together with the second welding target base member.

11. The method as set forth in claim 8 or 9, wherein, in the friction welding step, a friction welded portion is formed by (i) bringing the second surface into contact with the first surface so that a welding target interface is formed, (ii) repeatedly sliding, along an identical path, the first welding target base member and the second welding target base member in a state where a pressure is applied substantially perpendicularly to the first surface, and (iii) controlling a welding temperature at the welding target interface by adjusting the pressure.
